**Europäisches Patentamt**

**European Patent Office**

**Office européen des brevets**

(19)

(11) Veröffentlichungsnummer: **0 208 069**
**B1**

(12) # EUROPÄISCHE PATENTSCHRIFT

(45) Veröffentlichungstag der Patentschrift:
23.08.89

(51) Int. Cl.⁴: **F 02 M 25/08**

(21) Anmeldenummer: **86105438.5**

(22) Anmeldetag: **19.04.86**

(54) Verfahren und Vorrichtung zur Tankentlüftungssteuerung bei Brennkraftmaschinen.

(30) Priorität: **31.05.85 DE 3519475**

(43) Veröffentlichungstag der Anmeldung:
**14.01.87 Patentblatt 87/3**

(45) Bekanntmachung des Hinweises auf die Patenterteilung:
**23.08.89 Patentblatt 89/34**

(84) Benannte Vertragsstaaten:
**DE FR GB IT**

(56) Entgegenhaltungen:
**DE-A-2 829 958**
**US-A-4 467 769**

**PATENT ABSTRACTS OF JAPAN, Band 9, nr. 202 (M-406) 1925, 20. August 1985**

(73) Patentinhaber: **ROBERT BOSCH GMBH, Postfach 50, D-7000 Stuttgart 1 (DE)**

(72) Erfinder: **Plapp, Günther, Dipl.- Ing.,
Gymnasiumstrasse 26, D-7024 Filderstadt 1 (DE)**
Erfinder: **Zichner, Botho, Dipl.- Ing.,
Frankenstrasse 57, D-7141 Schwieberdingen (DE)**
Erfinder: **Jautelat, Rüdiger, Dipl.- Ing.,
Zeppelinstrasse 43, D-7146 Tamm (DE)**
Erfinder: **Kohler, Rolf, Dipl.- Ing., Breslauerstrasse 13, D-7141 Schwieberdingen (DE)**
Erfinder: **Kratt, Alfred, Dipl.- Ing., Gaisengasse 2, D-7218 Trossingen 1 (DE)**
Erfinder: **Müller, Hans- Martin, Dipl.- Ing., 39000 Hills Tech Drive, Farmington Hills Michigan 48018 (US)**

## Beschreibung

### Stand der Technik

Die Erfindung betrifft ein Verfahren und eine Vorrichtung zur Tankentlüftungssteuerung bei Brennkraftmaschinen. Bei Brennkraftmaschinen ist es zur Tankentlüftung bekannt, die sich aufgrund und in Abhängigkeit bestimmter Parameter (Kraftstofftemperatur, Kraftstoffmenge, Dampfdruck, Luftdruck, Spülmenge ...) bildenden Kraftstoffdämpfe nicht lediglich ins Freie zu entlüften, sondern der Brennkraftmaschine bevorzugt über einen mit Aktivkohle gefüllten Zwischenspeicher zur Verwertung zuzuführen. Der Aktivkohlebehälter nimmt dabei die sich im Tank bildenden Kraftstoffdämpfe, beispielsweise bei stehendem Fahrzeug auf und ist dann üblicherweise über eine Leitung mit dem Ansaugbereich der Brennkraftmaschine verbunden.

In diesem Zusammenhang ist es ferner bekannt, eine durch eine solche zusätzliche, auf die Tankentlüftung zurückzuführende Kraftstoffluftgemischmenge mögliche Erhöhung der Abgasemission zu verhindern oder kleinzuhalten, indem die Tankentlüftung nur bei bestimmten Betriebszuständen der Brennkraftmaschine zugelassen wird (s. Bosch "Motronic" - Technische Beschreibung C5/1, August 1981; DE-OS-2 829 958).

Der den Aktivkohlefilter enthaltende Zwischenspeicherbehälter ist in der Lage, Kraftstoffdämpfe bis zu einer bestimmten Maximalmenge zu speichern, wobei eine Spülung oder Regenerierung des Filters während des Motorbetriebs durch den von der Brennkraftmaschine entwickelten Unterdruck im Ansaugbereich erfolgt, wozu das Filter eine weitere Öffnung zur Umgebung besitzt. Notwendigerweise ergibt sich daher aber auch dann, wenn man nur bei bestimmten Betriebsbedingungen die Regenerierung des Zwischenspeichers zuläßt, ein zusätzliches, auf diese Tankentlüftung zurückzuführendes Kraftstoffluftgemisch, welches als nicht gemessenes oder mit sinnvollem Aufwand nicht meßbares Gemisch das normalerweise mit hohem Berechnungsaufwand sehr exakt erstellte Kraftstoffzumeßsignal - bei einer Kraftstoffeinspritzanlage beispielsweise die Dauer des Einspritzsteuerbefehls $t_i$ - und die sich hierdurch ergebende, der Brennkraftmaschine zugeführte Kraftstoffmenge verfälscht. Dabei kann bei bestimmten Drosselklappenwinkeln, die auf einen vorgegebenen Schwellenwert $\alpha_{Tank}$ bezogen werden können, der Lambda-Wert durch die Kraftstoffflüsse aus der Tankentlüftung ganz wesentlich beeinflußt werden. Daher ist eine solche, insbesondere auch das Fahrverhalten unter bestimmten Bedingungen beeinflussende, zusätzliche Kraftstoffmenge, die in den Extremfällen als Tankentlüftungsgemisch auch aus nahezu 100 % Luft oder 100 % Kraftstoffdampf bestehen kann, auch dann nicht akzeptierbar, wenn man den Einfluß dieser Störgröße durch pneumatische Stellglieder etwa auf den von der Brennkraftmaschine entwickelten Saugrohrdruck bezieht oder die Zuführung des Tankentlüftungsgemisches durch eine elektronische Ein/Aus-Steuerung für besonders empfindliche Betriebszustände, etwa Leerlauf, völlig ausschließt. Ferner ist der Tankentlüftungsbetrieb allgemein bei bestimmten Kraftstoffdosiersystemen für Brennkraftmaschinen, die zur eigentlichen Bestimmung der der Brennkraftmaschine zu jedem Augenblick in Abhängigkeit zu Drehzahl und Lastzustand zuzuführenden Kraftstoffmenge Kennfelder auswerten, die im Sinne eines rückbezogenen Lernvorgangs (Adaption) auch global und strukturell noch adaptiert werden können, besonders störend. Diese Adaption erfolgt üblicherweise durch Auswertung eines etwa von einer Lambdasonde stammenden Istwertssignals, wobei die Adaption dann fehlerhaft werden muß, wenn der Istwert ergänzend von einer willkürlich veränderbaren Größe bestimmt wird.

Aus der US-PS-4 467 769 ist ein Regelungssystem für das Luft/Kraftstoff-Verhältnis einer Brennkraftmaschine bekannt, bei dem während bestimmter Betriebskenngrößen Lernvorgänge ablaufen. Diese Lernvorgänge finden jedoch nur dann statt, wenn das Tankentlüftungssystem ausgeschaltet ist, damit die zu lernenden Korrekturgrößen nicht durch den Kraftstoffanteil während der Tankentlüftung beeinflußt werden. Im einzelnen offenbart die US-PS-4 467 769 ein Unterbrechen der Tankentlüftung und ein Lernen der Korrekturgrößen unterhalb eines bestimmten Luftdurchsatzes im Ansaugrohr der Brennkraftmaschine bzw. unterhalb eines bestimmten Drosselklappenwinkels. Dieses System hat sich als nicht optimal im Serieneinsatz erwiesen.

Der Erfindung liegt daher die Aufgabe zugrunde, bei einem Verfahren und einer Vorrichtung der eingangs genannten Gattung die Tankentlüftungssteuerung so auszulegen, daß sich einerseits kein störender Einfluß auf den Brennkraftmaschinenbetrieb ergibt und andererseits auch bei empfindlichen Betriebszuständen (Leerlauf) sowohl adaptiert als auch die Tankentlüftung ermöglicht wird.

### Vorteile der Erfindung

Die Erfindung löst diese Aufgabe mit den Merkmalen des Hauptanspruchs und den Merkmalen des Anspruchs 6 und hat den Vorteil, daß das Problem der Tankentlüftungssteuerung auf einfache Weise erfaßt und mit geringem Aufwand einer Zeitsteuerung so in die Kraftstoffzuführung zur Brennkraftmaschine integriert werden kann, daß bei allen Betriebszuständen, also insbesondere auch im Leerlauf eine Regenerierung des Aktivkohlebehälters erfolgt, gleichzeitig aber eine Beeinflussung der Selbstadaption im Bereich der berechneten Kraftstoffdosierung sicher vermieden wird.

Eine spezielle mechanische Zuordnung der Entlüftungsleitungen des den Zwischenbehälter für die Kraftstoffdämpfe bildenden Aktivkohlefilters einmal zur Aufnahme größerer Durchflüsse über das Luftfilter und zum anderen über ein gesteuertes Ventil, beispielsweise Dreiwegeventil und einen sprungförmige Mischänderungen vermeidenden Mischbehälter unmittelbar in das Saugrohr stromabwärts der Drosselklappe ermöglicht die sichere Beherrschung der Tankentlüftung ohne komplizierte Regel- und Steuerungseingriffe.

Durch die in den Unteransprüchen aufgeführten Maßnahmen sind vorteilhafte Weiterbildungen und Verbesserungen der Erfindung möglich. Besonders vorteilhaft ist die Möglichkeit einer ständigen Regenerierung des Aktivkohlebehälters über eine Leitung großen Querschnitts zum Luftfilter, wobei diese Wirkung jedoch nur bei größerem Durchsatz gegeben ist und im Falle einer Teillast bzw. Leerlaufregenerierung eine zyklische Entlüftungssteuerung über den Mischbehälter erfolgt.

## Zeichnung

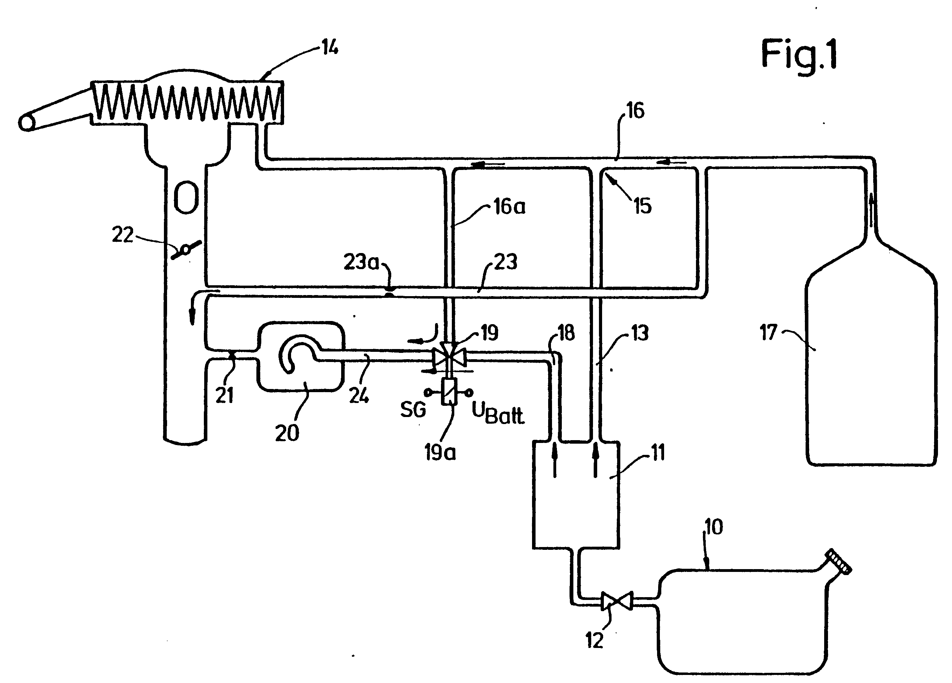

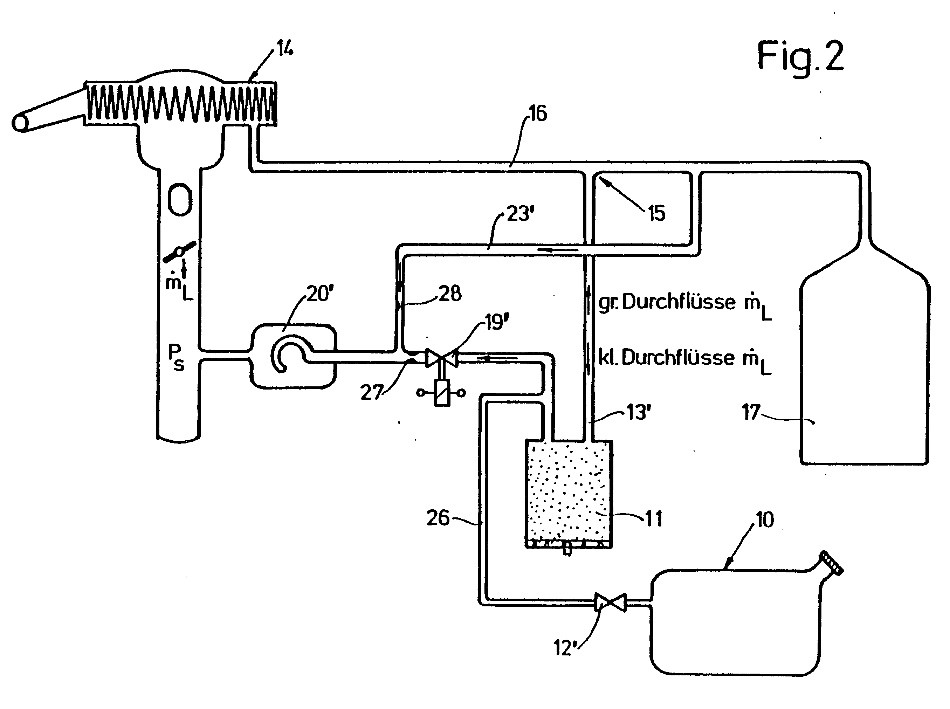

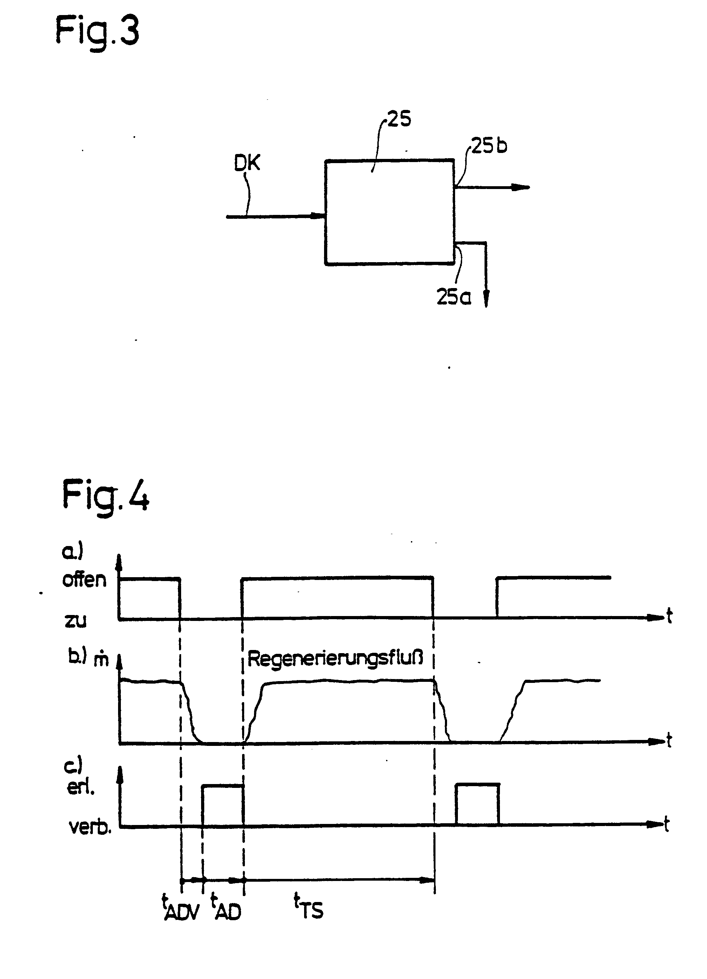

Ausführungsbeispiele der Erfindung sind in der Zeichnung dargestellt und werden in der nachfolgenden Beschreibung näher erläutert. Es zeigen Fig. 1 schematisiert eine erste Ausführungsform einer möglichen Zuordnung von Tankentlüftungskomponenten zum Ansaugbereich einer Brennkraftmaschine unter Einschluß von Kurbelgehäuseentlüftungsmitteln und Fig. 2 ein der Fig. 1 entsprechendes, zweites Ausführungsbeispiel mit geringfügig unterschiedlicher Leitungsführung, Fig. 3 das vereinfachte Ausführungsbeispiel der drosselklappenwinkelabhängigen elektronischen Steuerschaltung und Fig. 4 in Form von Diagrammen die zyklische Zeitablaufsteuerung für das Tankentlüftungsventil sowie für die Regenerierungs- und Adaptionsphase.

## Beschreibung der Ausführungsbeispiele

Der Grundgedanke vorliegender Erfindung besteht darin, durch eine einfache Drosselklappenwinkelsteuerung in Verbindung mit einer speziellen mechanischen Leitungsführung vom Aktivkohlefilter in den Ansaugbereich der jeweiligen Brennkraftmaschine unter Einschluß einer zyklischen Zeitsteuerung bei allen Betriebszuständen der Brennkraftmaschine einschließlich Leerlauf sowohl Regenerierung des Aktivkohlefilters als auch Adaption im Kennfeldrechner zuzulassen.

Die Erfindung ist insbesondere geeignet, bei solchen Kraftstoffdosiersystemen, bei denen durchlaufend eine Positionsangabe der Drosselklappenstellung vorliegt und auch zur Berechnung der der Brennkraftmaschine zuzuführenden Kraftstoffmenge, dann üblicherweise noch unter Einbeziehung einer Drehzahlangabe, ausgewertet wird, eingesetzt zu werden.

In Fig. 1 ist ein Kraftstofftank mit 10, ein Kraftstoffdämpfe aus diesem über ein zwischengeschaltetes Überdruckventil, welches beispielsweise bei $\Delta p > 15$ mbar öffnet, aufnehmender Zwischenbehälter als Aktivkohlefilter mit 11 bezeichnet; Überdruckventil trägt das Bezugszeichen 12. Der Aktivkohlefilter 11, wie er im folgenden lediglich noch genannt wird, ist über eine erste Leitung 13 mit vergleichsweise großem Querschnitt zum Luftfilter 14 ständig verbunden und kann über diese Leitung 13 auch ständig regeneriert werden, wobei die Leitung 13 bei 15 in eine weitere, zum Luftfilter 14 geführte Entlüftungsleitung 16 einmündet, die die Kurbelgehäuse-Entlüftungsleitung darstellt; das Kurbelgehäuse ist mit 17 bezeichnet. Dabei ist die Auslegung bzw. die Wirkung dieser Entlüftungsleitungen 13, 16 zum Luftfilter so, daß eine Entlüftung oder Regenerierung nur bei größerem Durchsatz ($\dot{m}_L$) gegeben ist.

Um bei Teillast (TL) und Leerlauf (LL) eine Regenerierung zu ermöglichen, ist vom Aktivkohlefilter 11 eine weitere Leitung 18 über ein Ventil, bei dem dargestellten Ausführungsbeispiel als Dreiwegeventil 19 ausgebildet, zu einem Mischbehälter 20 geführt, der über eine Drossel 21 mit einem Punkt im Ansaugrohr unterhalb der Drosselklappe 22 verbunden ist; an dieser Stelle liegt bei ganz oder teilweise geschlossener Drosselklappe 22 ein von der Saugwirkung des Motors herrührender Unterdruck vor, der beispielsweise, um hier einen numerischen Wert zu nennen, bei $p_s = 300$ mbar liegen kann. Der Druck im Luftfilterbereich liegt bei diesen Betriebszuständen dann üblicherweise bei $p_{amb} \doteq 1000$ mbar und nimmt nur bei größeren Durchsätzen geringfügig ab, wodurch dann die Kurbelgehäuseentlüftung und Aktivkohlefilterregenerierung über das Luftfilter 14 möglich wird.

Zur Saugrohrunterdruckseite ist ferner noch eine weitere Leitung 23 geführt, die als Zweigleitung von der Kurbelgehäuse-Entlüftungsleitung 16 abzweigt und über eine Drossel 23a bei den Betriebszuständen Teillast und Leerlauf einen Teil der Kurbelgehäuseentlüftung in den Saugrohrunterdruckbereich zuläßt.

Der Mischbehälter 20 ist so ausgebildet, daß er eine sprungförmige Gemischänderung beim Zuschalten bzw. Wegschalten der Tankentlüftung über das Ventil 19 vermeidet, und zwar dadurch, daß er einen vergleichsweise großen Raum zur Verfügung stellt, in den die Teilleitung 24 vom Ventil 19 einmündet, vorzugsweise mit der Mündung noch in Gegenstromrichtung angeordnet, so daß unter Einbeziehung der Drossel 21, die nur eine allmähliche Entlüftung des Mischbehälters 20 ermöglicht, die hierdurch bewirkten Gemischänderungen in ihrer Steigung so allmählich erfolgen, daß dieser Aktivkohle-Regenerierungspfad lediglich eine der üblichen Lambda-Regelungssteigung angepaßte, rampenförmige Änderung des Gemischs zuläßt, so daß der stets vorhandenen Lambda-Regelung Zeit gelassen wird, eine entsprechende Anpassung im Kraftstoffdosiersystem bei der Berechnung vorzunehmen.

Die Ansteuerung des Dreiwegeventils 19 erfolgt durch eine entsprechende Signalbeaufschlagung des Magnetteils 19a des Ventils vom in Fig. 3 vereinfacht dargestellten Steuergerät 25 für die Tankentlüftung, dem lediglich ein Drosselklappensignal DK zugeführt zu werden braucht, da bei der erfindungsgemäßen reinen Drosselklappenwinkelsteuerung für die Tankentlüftung keine weiteren Angaben über sonstige Brennkraftmaschinenzustände erforderlich sind.

Es ergibt sich dann folgende Grundfunktion. Da der Lambda-Wert bei Unterschreitung eines bestimmten Drosselklappenwinkels, der im folgenden als $\alpha_{Tank}$ bezeichnet wird, durch die Tankentlüftungs-Kraftstoffflüsse wesentlich beeinflußt wird, darf für Drosselklappenstellungen unterhalb des Schwellwertes nicht im Bereich der Berechnung der zuzuführenden Kraftstoffmenge adaptiert werden (weder strukturell noch global), solange ein Regenerierungsfluß vom Aktivkohlefilter 11 besteht. Das Steuergerät 25 enthält daher eine zyklische Zeitablaufsteuerung, die bei diesen Betriebszuständen (dies kann bei Teillast oder Leerlauf der Brennkraftmaschine sein) das Ventil 19 so ansteuert, wie im Diagramm der Fig. 4 gezeigt - einer Regenerierungsphase vorgegebener Zeitdauer, beispielsweise 5 Minuten folgt eine Adaptionsphase ebenfalls vorgegebener, üblicherweise kürzerer Zeitdauer (beispielsweise 1 Minute), und zwar im ständigen Wechsel. In Fig. 4 ist bei a) der Schaltzustand des Tankentlüftungsventils 19 zwischen offen (vorzugsweise nichtangesteuerter Zustand und die Entlüftungsleitung 18 über das Ventil 19 mit dem Mischbehälter verbindend) und geschlossen (angesteuert vom Steuergerät) dargestellt, in welcher Schaltposition beide Leitungen 18 (vom Aktivkohlefilter 11 kommend) und 16a (Zweigleitung von der Kurbelgehäuseentlüftungsleitung 16 zum Dreiwegeventil 19) abgesperrt sind.

Entsprechend b) in Fig. 4 fällt dann der Regenerierungsfluß ṁ vom Aktivkohlefilter 11 bis auf Null ab, so daß entsprechend dem Kurvenverlauf bei c) in Fig. 4 nach einer vorgegebenen Verzögerungszeit $t_{ADV}$ nach Schließen des Tankentlüftungsventils 19 das Signal "Adaption freigegeben" für die Dauer der Adaptionszeit $t_{AD}$ vom Steuergerät 25 am Ausgangsanschluß 25a herausgegeben wird. Dabei erfolgt die Ansteuerung des Tankentlüftungsventils vom Ausgangsanschluß 25b aus.

Nach Ablauf der Adaptionsfreigabe (Zeitdauer $t_{AD}$) schaltet das Steuergerät 25 zyklisch erneut auf Regenerierungsphase um, öffnet das Tankentlüftungsventil für die nachfolgende Tankentlüftungszeit $t_{TS}$, und das Ganze wiederholt sich dann zyklisch so lange, wie eine vorgegebene Drosselklappen-Schwellwertposition unterschritten ist.

Sobald dieser Drosselklappenwert überschritten wird, nimmt das Steuergerät 25 das Adaptionsverbot ohne Zeitverzögerung zurück und steuert auch das Tankentlüftungsventil nicht mehr an, welches in der Regel, wie soeben schon erwähnt, als stromlos offen ausgebildet ist. Die zyklische Zeitablaufsteuerung im Steuergerät 25 ist dabei so ausgebildet, daß sie bis zum Ende der Tankentlüftungszeit $t_{TS}$ weiter läuft und dann an dieser Stelle verharrt. Erst wenn sich am Eingang des Steuergeräts 25 erneut ein den vorgegebenen Schwellwert $\alpha_{Tank}$ unterschreitender Drosselklappenwinkelwert ergibt, beginnt die Zeitsteuerung wieder mit Ablauf der Verzögerungszeit $t_{ADV}$ - geht also zyklisch in den Steuerungsablauf der Fig. 4 über, allerdings mit der Maßgabe, daß dann, wenn der vorgegebene Drosselklappenschwellwert $\alpha_{Tank}$ zu einem Zeitpunkt unterschritten wird, zu welchem die Tankentlüftungszeit $t_{TS}$ noch nicht abgelaufen ist, die Adaption sofort wieder verboten und die Tankentlüftung geöffnet wird, mit entsprechendem Übergang in die normale Zeitablaufsteuerung.

Die folgenden Angaben betreffen einige numerische Angaben der einstellbaren Größen, zwischen denen diese sich bewegen können, wobei auch eine drehzahlabhängige Einstellung dieser Zeitgrößen noch möglich ist, um beispielsweise vorgegebene Zeitzyklen auch bei häufiger Betätigung des Gaspedals und einer entsprechenden Drosselklappenwinkelstellungsänderung, etwa im Stadtbetrieb, durchführen zu können.

$$t_{ADV} : 0 < t_{ADV} < 20\,s \quad \Delta t_{ADV} \cong 1\,s$$
$$t_{AD} : 10\,s < t_{AD} < 2\,min \quad \Delta t_{AD} \cong 10\,s$$
$$t_{TS} : 10\,s < t_{TS} < 10\,min$$

Das Ausführungsbeispiel der Leitungsführung entsprechend Fig. 2 unterscheidet sich von dem Ausführungsbeispiel der Fig. 1 bei Beibehaltung gleicher Bezugszeichen für gleiche Komponenten und von mit einem Beistrich oben versehenen Bezugszeichen für solche Komponenten, die in ihrer Struktur oder Wirkungsweise nur geringfügig geändert sind, lediglich dadurch, daß das Entlüftungsventil 19' ein einfaches Sperrventil ist, welches den Kraftstofffluß aus dem Aktivkohlebehälter 11 oder aus einer über ein Überdruckventil 12' unmittelbar unter Umgehung des Aktivkohlefilters vom Tank einmündenden Parallelleitung 26, wie weiter vorn schon erwähnt, über eine Drosselstelle 27 zum Mischbehälter 20' freigibt, der ohne Drossel in die Saugrohrunterdruckseite einmündet. Andererseits ist die Zweigleitung 23' von der Tankentlüftungsleitung 16 zum Luftfilter 14 ebenfalls über eine Drossel 28 in den Mischbehälter 20' geführt, wobei die Wirkung der Zweigleitung 13 im übrigen so ist, daß bei großen Durchflüssen ṁL, also großem Luftdurchsatz durch das Luftfilter 14 die Strömung vom Aktivkohlefilter 11 zur Kurbelgehäuseentlüftungsleitung 16 verläuft, während bei kleinen Durchsätzen, wie durch die entgegengesetzt verlaufenden Pfeile insoweit auch angedeutet, die Strömungsrichtung umgekehrt von der Kurbelgehäuseentlüftungsleitung 16 über das Aktivkohlefilter 11, das Entlüftungsventil 19', die Drossel 27 zum Mischbehälter 20' und von dort zur Saugrohrunterdruckseite verläuft.

Diese verschiedenen Leitungsführungen stellen sicher, daß lediglich durch Überwachung des Drosselklappenwinkels eine wirksame Tankentlüftungssteuerung möglich ist, ohne daß sich störende Einflüsse auf das Adaptionsverhalten im Bereich der Berechnung der eigentlichen Kraftstoffzufuhr ergeben.

Um für die Grenzen der Durchflußbereiche noch einige Angaben zu machen, sei erwähnt, daß sich kleine Luftdurchsätze als Saugrohrunterdruck $p_s$ in den folgenden Grenzen bemerkbar machen

$\dot{m}_L$ klein: 300 mbar $< p_s <$ 600 mbar

und große Durchsätze in den nachfolgend angegebenen Grenzen ergeben

$\dot{m}_L$ groß: 600 mbar $< p_s <$ 1000 mbar

Diese Schwellen werden durch die Drosselklappenstellung erkannt.

**Patentansprüche**

1. Verfahren zur Tankentlüftungssteuerung bei Brennkraftmaschinen, bei dem ein Regenerierungs-Kraftstofffluß aus einem Kraftstoffdämpfe aus dem Tank aufnehmenden Zwischenbehälter (Aktivkohlefilter) über ein Ventil (19, 19') dem Ansaugbereich der Brennkraftmaschine ergänzend zu der Kraftstoffmenge zugeführt wird, die unter Zugrundelegung einer, einer Selbstadaption (beispielsweise strukturell und/oder global) zugänglichen Kennfeldauswertung ermittelt wird, dadurch gekennzeichnet, daß der Regenerierungs-Kraftstofffluß aus dem Zwischenbehälter (Aktivkohlefilter 11) über das Ventil (19, 19') bei Unterschreiten einer vorgegebenen Drosselklappen-Winkelposition ($\alpha < \alpha_{Tank}$) in den Ansaugbereich der Brennkraftmaschine durch eine zyklische Zeitsteuerung für einen vorgegebenen Zeitraum zugelassen wird, im ständigen Wechsel unterbrochen mit erlaubten Adaptionsphasen für die Kennfeldauswertung während der Unterbrechung des Regenerierungs-Kraftstoff-Flusses.

2. Verfahren nach Anspruch 1, dadurch gekennzeichnet, daß der Regenerierungs-Kraftstofffluß bei Unterschreiten des vorgegebenen Drosselklappen-Winkelpositionsschwellwerts über einen eine sprungförmige Gemischänderung verhindernden Mischbehälter (20, 20') in die Saugrohrunterdruckseite stromabwärts zur Drosselklappe eingeleitet wird.

3. Verfahren nach Anspruch 1 oder 2, dadurch gekennzeichnet, daß die erlaubten Adaptionsphasen im Rechnerbereich für die Kraftstoffzuführmenge nach Unterbrechung des Tankentlüftungsventils (19, 19') mit vorgegebener Zeitverzögerung ($t_{ADV}$) einsetzen, mit der Möglichkeit eines ununterbrochenen Regenerier-Kraftstoffflusses vom Aktivkohlefilter (11) dann, wenn die vorgegebene Tankentlüftungsschwelle als Drosselklappen-Winkelpositionsschwellwert ($\alpha_{Tank}$) überschritten ist.

4. Verfahren nach einem der Ansprüche 1 - 3, dadurch gekennzeichnet, daß zusammen mit dem Tankentlüftungs-Kraftstofffluß eine Kurbelgehäuseentlüftung über die Ventilsteuerung in den Bereich des Mischbehälters (20) und aus diesem über eine Drossel (21) zur Saugrohrunterdruckseite geführt wird.

5. Verfahren nach einem der Ansprüche 1 - 4, dadurch gekennzeichnet, daß bei großem Luftdurchsatz mindestens eine Regenerierungskraftstoffflußteilmenge über eine Querverbindungsleitung (13, 13') vom Aktivkohlefilter (11) in die Kurbelgehäuseentlüftungsleitung (16) zum Luftfilter (14) der Brennkraftmaschine geführt wird.

6. Vorrichtung zur Tankentlüftungssteuerung bei Brennkraftmaschinen zur Durchführung des Verfahrens nach einem oder mehreren der Ansprüche 1 - 5, dadurch gekennzeichnet, daß in einem ein Tankentlüftungsventil (19, 19') in einer Verbindungsleitung vom Aktivkohlebehälter (11) zur Saugrohrunterdruckseite ansteuerndem Steuergerät (25) eine bei Unterschreiten eines vorgegebenen Drosselklappen-Winkelpositionsschwellwertes ansprechende Zeitsteuerung angeordnet ist, die im zyklischen Ablauf jeweils das Entlüftungsventil (19, 19') öffnet oder schließt und Mittel vorgesehen sind zur gleichzeitigen Ausgabe eines entsprechenden Adaptionsverbots oder einer Adaptionserlaubnis für den Kraftstoffmengendosierrechner.

7. Vorrichtung nach Anspruch 6, dadurch gekennzeichnet, daß zur Ermöglichung eines Regenierungskraftstoffflusses aus dem Aktivkohlefilter (11) parallel zur zeitgesteuerten Durchflußfreigabe bei kleineren Luftdurchsätzen für große Luftdurchsätze eine zweite Verbindungsleitung (13) zum Luftfilter (14) geführt ist.

8. Vorrichtung nach Anspruch 7, dadurch gekennzeichnet, daß die zweite Verbindungsleitung vom Aktivkohlefilter (11) in eine Kurbelgehäuseentlüftungsleitung zum Luftfilter (14) einmündet.

9. Vorrichtung nach einem der Ansprüche 6 - 8, dadurch gekennzeichnet, daß das Tankentlüftungsventil (19) als Dreiwegeventil ausgebildet ist und den Aktivkohlefilter (11) und gegebenenfalls eine Querleitung (16a) von der Kurbelgehäuseentlüftungsleitung (16) mit einem Mischbehälter (20) verbindet, der zur Vermeidung sprungförmiger Gemischänderungen ein vorgegebenes Innenvolumen ausweist und über eine Drossel (21) mit der Saugrohrunterdruckseite (stromabwärts zur Drosselklappe 22) der Brennkraftmaschine verbunden ist.

10. Vorrichtung nach Anspruch 9, dadurch gekennzeichnet, daß die vom Tankentlüftungsventil (19, 19') beaufschlagte Leitung (24) zum Mischbehälter in diesen schleifenförmig mit entgegen der Strömungsrichtung rückgeführter Mündung einmündet.

11. Vorrichtung nach einem der Ansprüche 6 - 10, dadurch gekennzeichnet, daß eine eine Drossel (23a) enthaltende zusätzliche Parallelleitung (23) von der Tankentlüftungsleitung (16) zur Saugrohrunterdruckseite angeordnet ist.

12. Vorrichtung nach Anspruch 6, dadurch gekennzeichnet, daß das Tankentlüftungsventil (19') ein einfaches Sperrventil ist und mit nachgeschalteter Drossel (37) eine Leitung zum Mischbehälter (20') öffnet oder schließt, wobei eine weitere Zweigleitung (23') mit Drossel (28) von der Kurbelgehäuseentlüftungsleitung (16) zum Mischbehälter (20') vorgesehen ist.

## Patentansprüche

1. Method for tank vent control in internal combustion engines in which a regeneration fuel flow from an intermediate container (active carbon filter) accepting fuel vapours from the tank via a valve (19, 19') is supplied to the induction area of the internal combustion engine as a supplement to the fuel quantity which is determined on the basis of an evaluation of a characteristic field accessible for self-adaption (for example structural and/or overall) characterized in that the regeneration fuel flow from the intermediate container (active carbon filter 11) via the valve (19, 19') into the induction area of the internal combustion engine is permitted, when the throttle butterfly angle position is less than a specified value ($\alpha < \alpha_{Tank}$) by a cyclic time control for a specified period of time, interrupted in continuous alternation with permitted adaption phases for the characteristic field evaluation during the interruption of the regeneration fuel flow.

2. Method according to claim 1, characterized in that the regeneration fuel flow, when the throttle butterfly angle position is less than the specified threshold value, is introduced into the induction pipe depression side downstream of the throttle butterfly via a mixture container (20, 20') which prevents a step-shaped mixture change.

3. Method according to claim 1 or claim 2, characterized in that the permitted adaption phases in the computer area for the fuel supply quantity are initiated with a specified time delay ($t_{ADV}$) after the interruption of the tank vent valve (19, 19') with the possibility of an uninterrupted regeneration fuel flow from the active carbon filter (11) when the tank vent threshold, specified as a throttle butterfly angle position threshold valve ($\alpha_{tank}$), is exceeded.

4. Method according to one of claims 1 to 3, characterized in that crankcase venting is led together with the tank vent fuel flow via the valve control into the region of the mixture container (20) and from this via a throttle (21) to the induction pipe depression side.

5. Method according to one of claims 1 to 4, characterized in that, in the case of a large air flow, at least one regeneration fuel flow partial quantity is fed via a transverse connecting pipe (13, 13') from the active carbon filter (11) into the crankcase vent pipe (16) to the air filter (14) of the internal combustion engine.

6. Device for tank vent control in interal combustion engines for carrying out the method according to one or more of claims 1 to 5, characterized in that a time control which responds when the throttle butterfly angle position is less than a specified threshold value is arranged in a control unit (25) triggering a tank vent valve (19, 19') in a connecting pipe from the active carbon container (11) to the induction pipe depression side, which time control opens or closes in a cyclic sequence the particular vent valve (19, 19') and means are provided for the simultaneous emission of a corresponding adaption block or adaption permission for the fuel quantity metering computer.

7. Device according to claim 6, characterized in that a second connecting pipe (13) leads to the air filter (14) for large air flows to permit a flow of regeneration fuel from the active carbon filter (11) in parallel to the time-controlled flow release for smaller air flows.

8. Device according to claim 7, characterized in that the second connecting pipe from the active carbon filter (11) enters a crankcase vent pipe to the air filter (14).

9. Device according to one of claims 6 to 8, characterized in that the tank vent valve (19) is designed as a three-way valve and connects the active carbon filter (11), and possibly a transverse pipe (16a) from the crankcase vent pipe (16), to a mixture container (20) which, to avoid step-shaped mixture changes, has a specified internal volume and is connected via a throttle (21) to the induction pipe depression side (downstream of the throttle butterfly 22) of the internal combustion engine.

10. Device according to claim 9, characterized in that the pipe (24) subject to the tank vent valve (19, 19') and leading to the mixture container enters the latter in the shape of a loop with the entry directed against the flow direction.

11. Device according to one of claims 6 to 10, characterized in that an additional parallel pipe (23), containing a throttle (23a), from the tank vent pipe (16) to the induction pipe depression side is arranged (sic).

12. Device according to claim 6, characterised in that the tank vent valve (19') is a simple shutoff valve and, with a downstream throttle (37), opens or closes a pipe to the mixture container (20'), a further branch pipe (23') with throttle (28) being provided from the crankcase vent pipe (16) to the mixture container (20').

## Revendications

1. Procédé pour commander l'aération du réservoir de carburant de moteurs à combustion interne, procédé dans lequel un flux de carburant de régénération en provenance d'un récipient intermédiaire (filtre à charbon actif) recevant des vapeurs de carburant à partir du réservoir, est amené, par l'intermédiaire d'une soupape (19, 19'), à la zone d'aspiration du moteur à combustion interne, en complément de la quantité de carburant qui est déterminée sur la base d'une exploitation de champ caractéristique accessible à une auto-adaptation (par exemple structurelle et/ou globale), procédé caractérisé en ce que l'arrivée du flux de carburant de régénération en provenance du récipient intermédiaire (filtre à charbon actif 11) dans la zone d'aspiration du moteur à combustion interne, par l'intermédiaire de la soupape (19, 19') est autorisée par une commande cyclique cadence-temps pour une période de temps prédéfinie lors du franchissement vers le bas d'une position angulaire prédéfinie ($\alpha < \alpha_{Tank}$), cette arrivée étant interrompue en alternance constante, tandis que des phases d'adaptation sont permises pour l'exploitation du champ caractéristique pendant ces interruptions du flux de carburant de régénération.

2. Procédé selon la revendication 1, caractérisé en ce que le flux de carburant de régénération, lors du franchissement vers le bas de la valeur de seuil prédéfinie de la position angulaire du clapet d'étranglement, est introduit en aval du clapet d'étranglement dans le côté dépression de la tubulure d'aspiration, par l'intermédiaire d'un récipient de mélange (20, 20') empêchant une modification brusque du mélange.

3. Procédé selon la revendication 1 ou 2, caractérisé en ce que les phases d'adaptation prévues dans la zone de calcul pour la quantité d'alimentation en carburant s'établissent avec une période de temporisation prédéfinie ($t_{ADV}$) après l'interruption de l'arrivée du carburant par la soupape d'aération du réservoir (19, 19'), avec la possibilité d'un flux ininterrompu de carburant de régénération en provenance du filtre à charbon actif (11) lorsque le seuil prédéfini d'aération du réservoir correspondant à la valeur de seuil ($\alpha_{Tank}$) de la position angulaire du clapet d'étranglement est dépassé.

4. Procédé selon une des revendications 1 à 3, caractérisé en ce que, en tant que le flux de carburant d'aération du réservoir, une aération du carter du vilebrequin est amenée par l'intermédiaire de la commande par soupape dans la zone du récipient de mélange (20) et est amenée à partir de celui-ci, par l'intermédiaire d'un étranglement (21) au côté dépression de la tubulure d'aspiration.

5. Procédé selon une des revendications 1 à 4, caractérisé en ce que pour un débit d'air important, au moins une quantité partielle du flux de carburant de régénération est amenée par l'intermédiaire d'une canalisation de liaison transversale (13, 13') du filtre à charbon actif (11) dans la canalisation (16) d'aération du carter du vilebrequin vers le filtre d'air (14) du moteur à combustion interne.

6. Dispositif pour commander l'aération du réservoir de carburant de moteurs à combustion interne, en mettant en oeuvre le procédé selon une ou plusieurs des revendications 1 à 5, dispositif caractérisé en ce que dans un appareil de commande (25) commandant une soupape d'aération du réservoir de carburant (19, 19') sur une canalisation de liaison entre le récipient de charbon actif (11) et le côté dépression de la tubulure d'aspiration, est disposée une commande cadence-temps réagissant lors du franchissement vers le bas d'une valeur de seuil prédéfinie de la position angulaire du clapet d'étranglement, cette commande ouvrant ou fermant respectivement selon une succession cyclique, la soupape d'aération (19, 19'), et des moyens étant prévus pour délivrer simultanément une interdiction d'adaptation ou bien une permission d'adaptation pour le calculateur du dosage de la quantité de carburant.

7. Dispositif selon la revendication 6, caractérisé en ce que pour permettre un flux de carburant de régénération en provenance du filtre à charbon actif (11) parallèlement à la libération de débit commandé en fonction du temps pour de faibles débits d'air, une seconde canalisation de liaison (13) est amenée au filtre d'air (14) pour des débits d'air importants.

8. Dispositif selon la revendication 7, caractérisé en ce que la seconde canalisation de liaison en provenance du filtre à charbon actif (11) débouche dans une canalisation d'aération du carter de vilebrequin aboutissant au filtre d'air (14).

9. Dispositif selon une des revendications 6 à 8, caractérisé en ce que la soupape d'aération (19) du réservoir est une soupape à trois voies, et relie le filtre à charbon actif (11) et, éventuellement, une canalisation transversale (16a) en provenance de la canalisation d'aération (16) du carter de vilebrequin, à un réservoir de mélange (20), qui pour éviter des modifications brusques du mélange, comporte un volume interne prédéfini et est relié, par l'intermédiaire d'un étranglement (21) avec le côté dépression de la tubulure d'aspiration (en aval du clapet d'étranglement 22) du moteur à combustion interne.

10. Dispositif selon la revendication 9, caractérisé en ce que la canalisation (24) commandée par la soupape d'aération du réservoir (19, 19') débouche dans le récipient de mélange sous la forme d'une boucle dont le débouché se fait à l'inverse du sens de l'écoulement.

11. Dispositif selon une des revendications 6 à 10, caractérisé en ce qu'une canalisation parallèle supplémentaire (23) comportant un étranglement (23a) est disposée entre la canalisation d'aération (16) du réservoir et le côté dépression de la tubulure d'aspiration.

12. Dispositif selon la revendication 6, caractérisé en ce que la soupape d'aération du réservoir (19') est une simple soupape d'arrêt et ouvre ou ferme, par l'intermédiaire d'un étranglement (37) une canalisation allant au récipient de mélange (20'), une autre canalisation dérivée (23') avec un étranglement (28) étant prévue entre la canalisation d'aération (16) du carter du vilebrequin et le récipient de mélange (20').

Fig.1

EP 0 208 069 B1

Fig.2

gr. Durchflüsse $\dot{m}_L$

kl. Durchflüsse $\dot{m}_L$

$\dot{m}_L$

$P_s$

10 11 12' 13' 14 15 16 17 19' 20' 23' 26 27 28

# Fig.3

DK    25    25b

25a

# Fig.4

a.)
offen

zu                                                          t

b.) ṁ    Regenerierungsfluß

t

c.)
erl.

verb.                                                       t

$t_{ADV}$    $t_{AD}$    $t_{TS}$